# EUROPEAN PATENT SPECIFICATION

(11) **EP 3 671 163 B1**
(45) Date of publication and mention of the grant of the patent: **03.08.2022**
(21) Application number: 19217835.8
(22) Date of filing: 19.12.2019
(51) Int. Cl.: G01L 13/02, G01L 19/00, G01L 19/06

(54) **PRESSURE GAUGE FOR MEASURING A PRESSURE DIFFERENCE BETWEEN TWO FLUIDS**
DRUCKANZEIGE ZUR MESSUNG EINES DRUCKUNTERSCHIEDES ZWISCHEN ZWEI FLÜSSIGKEITEN
JAUGE DE PRESSION POUR MESURER UNE DIFFÉRENCE DE PRESSION ENTRE DEUX FLUIDES

(30) Priority: 21.12.2018 IT 201800020809
(43) Date of publication of application: 24.06.2020
(73) Proprietor: WATTS INDUSTRIES ITALIA S.r.l., 38121 Trento (IT)
(72) Inventor: CUCCINIELLO, Alfredo Marco, 38121 Trento (IT); FONTANA, Sergio, 38121 Trento (IT); MORUZZI, Paolo, 38121 Trento (IT); GRASSI, Pietro, 38121 Trento (IT)
(74) Representative: Stucovitz, Alessandro

(56) References cited:
- EP-A1- 0 591 564
- US-A1- 2013 008 257
- US-B2- 9 054 222

## Description

The present invention relates to a device for measuring a differential pressure between two fluids, in general for use in networks which convey fluids, in particular fluids of a pressurized hydraulic circuit, for example for performing heating and/or cooling.

It is known, in the technical sector relating to the hydraulic distribution of fluids, that there is a need to measure a pressure difference between two fluids under pressure, for example, drawn off at different points of a hydraulic circuit inside which a liquid for heating rooms circulates. In this context, it is known that the greatest difficulties are encountered when it is required to measure a pressure difference (ΔP) between the pressure (P+) of a first fluid and the pressure (P-) of a second fluid which is much smaller than the nominal pressure of one or both said fluids. In the case of hydraulic heating circuits it may happen for example that this nominal pressure of the first and/or second fluid has a value of around 10 bar, while the pressure difference ΔP is in the region of 10-50 mbar (1 mbar = 100 Pa). The devices able to measure a pressure of a fluid are also known by the name of pressure gauges.

Capsule-type pressure gauges are known, where a fluid under pressure (P) enters into a capsule, formed by joining together in a sealed manner two metal membranes, said capsule being deformed owing to the forces which are generated inside the volume enclosed by the two membranes, as occurs for example in an air-filled balloon. The deformation causes a displacement respect to each other of the membranes which form the walls of the capsule and therefore an expansion of the capsule. By transmitting and amplifying the translatory movement of the outer surface of a wall of the capsule, for example by means of kinematic chains (levers and gears) to an indicator or measuring instrument it is possible to obtain at the output an indication or measurement of the pressure level relative to the atmosphere outside the capsule (P-Patm). It is for example possible to transmit and convert the translatory movement of the capsule wall into a rotational movement of a pointer which indicates the value of the relative pressure on a suitably graduated dial face.

US 9 054 222 discloses an example of a ceramic capsule differential pressure gauge, where a deformation of a capsule membrane is detected by means of semiconductor transducers. These types of pressure gauges are suitable for small pressure measurements since, by modifying the form of the capsules and the thickness of the materials, it is possible to obtain elements (capsules) which are particularly sensitive to pressure. On the other hand, capsules which are able to measure low pressure levels may be damaged by high pressures, which cause the said capsule to be permanently deformed or to explode.

In the technical sector of hydraulic circuits so-called differential pressure gauges are also known, these being able to measure a pressure difference between two fluids under pressure.

The main differential pressure gauges used in hydraulic circuits are double Bourdon tube pressure gauges and magnetic piston pressure gauges.

With regard to double Bourdon tube pressure gauges, the capacity for measuring small differential pressures is greatly limited by the pressure of the two fluids so that, for example, a maximum resolution, for example, of 20 kPa corresponds to an end-of-scale value of the instrument equal to 10 bar, well above the values of 10-30 mbar which are to be measured in the applications described above.

Magnetic-piston pressure gauges pose a similar problem since, with a reduction in the differential pressure which is to be measured, the dimensions of the piston must be increased, this making the pressure gauges impractical or even unsuitable for use in the field.

The technical problem which is posed therefore is that of providing a device for measuring a differential pressure between two fluids under pressure which solves or at least partially overcomes the aforementioned problems of the prior art, being able in particular to measure differential pressure values which are very small in relation to the nominal pressure of the two fluids.

In connection with this problem it is also required that the measurement device (or pressure gauge) should be able to measure differential pressures of the order of mbar, also in conditions where the nominal pressure of the two fluids is greater than, for example 5 bars, this being a frequent situation for applications in hydraulic circuits.

In connection with this problem it is also required that this device should have small dimensions, be easy and inexpensive to produce and assemble and be able to be easily installed and used, even by personnel who are not highly specialized.

A further desirable aspect is that the device should be able to provide a reading of the differential pressure measured which is not hindered in the case where water or liquids containing impurities and/or rich in deposits are used, these tending in particular to soil the reading dial faces of the pressure gauges, preventing reading of the pressure value measured.

These results are obtained according to the present invention by a pressure gauge according to Claim 1 and by a corresponding measuring method according to Claim 11.

With this differential pressure gauge and measuring method, in which a safety device places in fluid communication the internal chamber with the inlet port for supplying the second fluid to the capsule, for as long as the differential pressure is greater than or equal to a safety value suitable for measurement by means of the said capsule, it is possible to measure a differential pressure very precisely, being able to detect very small pressure difference values, irrespective as to the nominal pressure of the two fluids under pressure which may be greater even by a few orders of magnitude than the differential pressure value to be measured.

The capsule is preferably formed by at least two metal membranes which are sealingly closed and define an internal volume. A unit designed to convert the displacement of a part of the capsule into an indication and/or measurement of the differential pressure comprises preferably a transmission system designed to convert and optionally amplify the translatory displacement of a part of a membrane of the capsule into a rotation of a shaft inside the chamber of the casing.

In particular, the transmission system may comprise a kinematic chain comprising a pin integral with the outer surface of a membrane of the capsule kinematically connected to a segment gear, so that the displacement of the pin causes a proportional rotation of the segment gear about its own axis; a toothed wheel, rotationally integral with the internal shaft, meshing with the segment gear. The internal shaft is preferably connected to a measurement indicator element, such as a pointer arranged on a dial face, and/or to measurement acquisition means such as a rotational sensor able to convert the rotation of the internal shaft into an electric signal.

The pressure gauge comprises also an assembly for transmission of the rotational movement of the internal shaft to a shaft outside the casing, the transmission assembly being preferably of the magnetic transmission type. In a preferred embodiment, the safety device comprises a safety valve arranged along a capsule supply line between the inlet port for supplying the second fluid and the capsule itself, preferably by means of a connection which is fluid-dynamically connected to a capsule supply line. The safety valve preferably comprises a closing member arranged inside a housing, one end of which is in fluid communication with the inlet port supplying the second fluid, wherein the housing further comprises an opening which places it in fluid communication with the internal chamber of the casing, and the closing member is designed to cause opening/closing of the connection between the end of the valve connected to the line supplying the second fluid under pressure and the opening, a passage for the fluid being preferably provided in a peripheral zone of the closing member, in particular of its disc.

The closing member may for example be movable into an open position against the thrust of spring means pushing against the closing member so as to cause closing of the connection between the inlet port supplying the second fluid and the internal chamber of the casing.

In a preferred embodiment, the capsule is configured to receive inside it a second fluid at a pressure greater than the first pressure of the first fluid, and wherein said deformation of the capsule is an expansion proportional to the pressure difference between said second fluid at a higher pressure and said first fluid at a lower pressure.

Further details may be obtained from the following description of non-limiting examples of embodiment of the subject of the present invention provided with reference to the attached drawings, in which:
Figure 1 shows a schematic illustration of the basic structure of a measuring device according to the present invention;
Figure 2 shows a side view of an example of embodiment of a measuring device according to the invention, which is partially disassembled;
Figure 3a shows a cross-sectional view of the device according to Figure 2 in the condition where the housing chamber is being filled with the safety device open;
Figures 3b and 3c show detailed views, respectively, of a dial face and a safety valve of the device according to Figure 3a;
Figure 4a shows a cross-sectional view of the device shown in Figure 2 in the condition where there is a pressure equilibrium between a first fluid and a second fluid;
Figures 4b and 4c show detailed views, respectively, of a dial face and a safety valve of the device according to Figure 4a;
Figure 5a shows a cross-sectional view of the device shown in Figure 2 during measurement of a differential pressure between the first fluid and the second fluid;
Figure 5b shows a schematic view of the dial face of the device shown in Figure 5a;
Figure 6 shows a perspective view of the capsule, the dial face and the means for transmitting the movement of the device according to Figure 2.

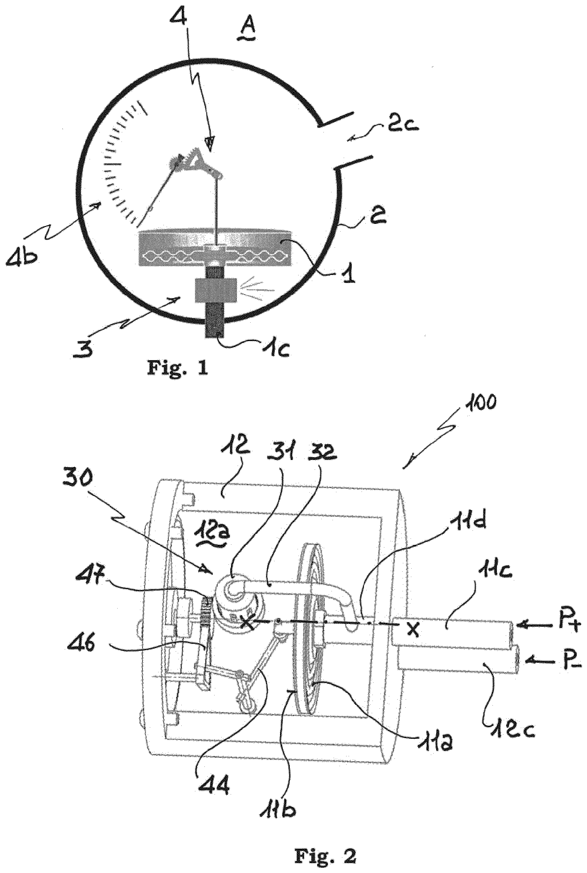

Fig. 1 shows in schematic form the structure of a differential pressure gauge according to the present invention, which comprises an external casing 2 which defines a chamber 2a sealingly closed with respect to the external environment A and able to be filled with a first fluid at a lower pressure P-, by means of at least one line 2c for supplying the said first fluid to the internal chamber.

A capsule 1 is inserted inside the internal chamber 2a and is designed to be filled with a second fluid at a higher pressure P+, by means of a inlet port/line 1c for supplying the said second fluid.

The capsule 1 is generally formed by two membranes which are sealingly closed and is configured to be deformed, in particular to expand, depending on the pressure difference between the pressure P- of the first fluid inside the chamber and the pressure P+ of the second fluid inside the said capsule. The device for measuring the differential pressure also comprises a unit 4 able to convert the translatory displacement of at least one membrane of the capsule into an indication or measurement of the value of the differential pressure between the first fluid and the second fluid.

A safety device 3 is arranged inside the internal chamber 2a and is arranged in fluid communication between the inlet port 1c for supplying the second fluid to the capsule 1 and the capsule 1 itself. The safety device is configured to place in fluid communication the line 1c for supplying the second fluid at a pressure P+ with the internal chamber 2a for as long as the differential pressure ΔP = P+ - P- between the inside of the chamber 2a and the second fluid is greater than or equal to a predefined safety value Psaf. The safety device therefore allows the pressure to be discharged and the chamber 2a to be filled with the second fluid for as long as said safety value Psaf is not reached. If the differential pressure acting on the two surfaces of a membrane of the capsule (inner towards P+ and outer towards P-) remains less than Psaf, the safety device does not open.

When the differential pressure between the inlet port 1c supplying the second fluid and the inside of the chamber 2a returns to a value less than Psaf, the safety device closes the connection between the inlet port 1c supplying the second fluid and the internal chamber 2a.

With this general configuration, the operating principle of the pressure gauge is as follows:
- the capsule 1 is filled with the second fluid at a pressure P+;
- the volume of the internal chamber 2a is filled with the first fluid at a pressure P-;
- the walls of the capsule are therefore subjected to a pressure P+ on the inside and P- on the outside, namely to a pressure differential ΔP = (P+) - (P-), which tends to expand the internal volume of the capsule. Owing to this pressure differential, the walls of the capsule are deformed and move, and this translatory displacement is converted by the conversion unit 4 so as to produce at its output an indication or measurement of the differential pressure level ΔP = (P+) - (P) detected; this indication is schematically indicated in Figure 1 by the movement of a pointer 4a on a graduated dial face 4b. If the differential pressure which acts on the capsule remains below the Psaf value, the safety device does not open and the pressure gauge remains in the normal measuring condition.

If the values of P+ and P- are much greater than the value of ΔP (as could happen in the case of pressurized hydraulic circuits) it is possible, if the safety device 3 were not present, that the pressure P-, during filling of the chamber 2a with the first fluid and the capsule with the second fluid P+, could push from the inside the walls of the capsule without the first fluid at a pressure P- having filled the chamber 2a defined by the external casing. During transient and start-up conditions, there would therefore be the possibility of having a capsule which is acted by a differential pressure ΔP which is between the second fluid P+ and atmospheric pressure or in any case much greater than Psaf.

The capsule in this case would be subject to irreparable damage.

In this situation the safety device ensures the equilibrium of the (internal/external) pressures acting on the capsule should the surfaces of the capsule be even momentarily exposed to a pressure difference such as to damage it (greater than Psaf).

Therefore, in a realistic risk condition, for example during the transient stage of filling of the chamber with the first fluid and the capsule with the second fluid, the safety device opens, allowing filling of the internal chamber 2a also with the second fluid at a pressure P+. When ΔP returns to a value lower than Psaf, the safety device closes and the pressure gauge starts to function normally in the ΔP measuring configuration.

With the measuring device according to the invention, there is therefore no damage to the capsule which may be configured to detect pressure differences which are even very small, independently of the nominal pressure of the two fluids under pressure supplied to the pressure gauge, which may therefore be much greater than the differential pressure range which can be measured by the pressure gauge.

The solution is therefore particularly suitable for measuring a differential pressure in pressurized hydraulic circuits where the first and second fluids consist of a same fluid flowing in the circuit, drawn off at points of the said circuit where there are different pressures. A particular example of such hydraulic circuits are those inside which a single liquid under pressure circulates, for the heating of rooms.

With reference now to Figure 2, a preferred example of embodiment of a pressure gauge 100 according to the invention comprises an external casing 12 which is sealingly closed off from the atmosphere and which defines an internal chamber 12a designed to be filled with a first fluid at a first pressure P-.

A capsule 11 is arranged inside the chamber 12a and generally comprises two metal membranes 11a, 11b which are sealingly joined together so as to delimit an internal volume and define respective walls of the capsule situated opposite each other in a longitudinal direction X-X. The capsule is configured to be deformed depending on the differential pressure between the volume inside the walls 11a,11b and the chamber 12a inside the casing 2, said deformation being generally formed by an increase in the internal volume corresponding to a displacement along the longitudinal direction X-X of at least a part of one or both the walls 11a, 11b of the capsule.

The casing 12 has, defined thereon, a supply inlet port 12c which is open outwards so as to allow the entry of the first fluid at a (low) pressure P-inside the chamber 12a. The casing 12 also has a supply inlet port 11c for supplying the second fluid at a (high) pressure P+ to the capsule via a line 11d.

The safety device 30 comprises a safety valve 31 arranged along the capsule supply line 11d between the inlet 11c for supplying the second fluid and the capsule 11 itself, for example by means of a connection 32 which is connected fluid-dynamically to the capsule supply line 11d. The safety valve 31 is mounted at the end of the connection 32 and is configured:
-- to remain closed for as long as the differential pressure between the internal chamber 12a and the line 11d connected to the inlet port 11c for the second fluid at a pressure P+ remains below a predefined safety value Psaf, value below which protection of the capsule is ensured;
-- to open so as to place in fluid communication the supply line 11 supplying the second fluid to the capsule 11 with the inside of the chamber 12a of the casing when the differential pressure ΔP between the internal chamber 12a and the line 11d and the inlet port 11c for the second fluid at a pressure P+ is greater than or equal to said safety value Psaf, allowing the passage of the fluid from the line 11d to the internal chamber and therefore discharging of the excess pressure, and more rapid filling of the internal chamber 12a of the casing 12.

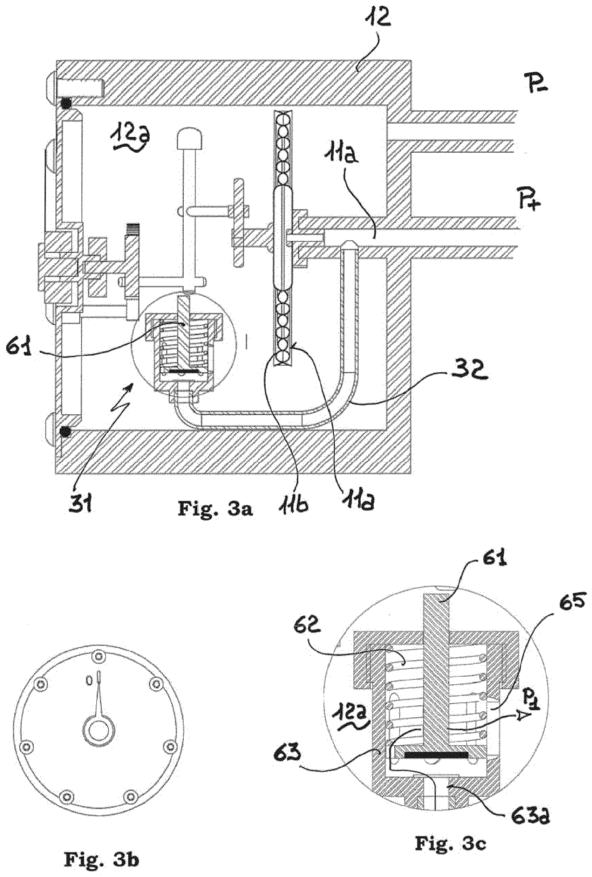

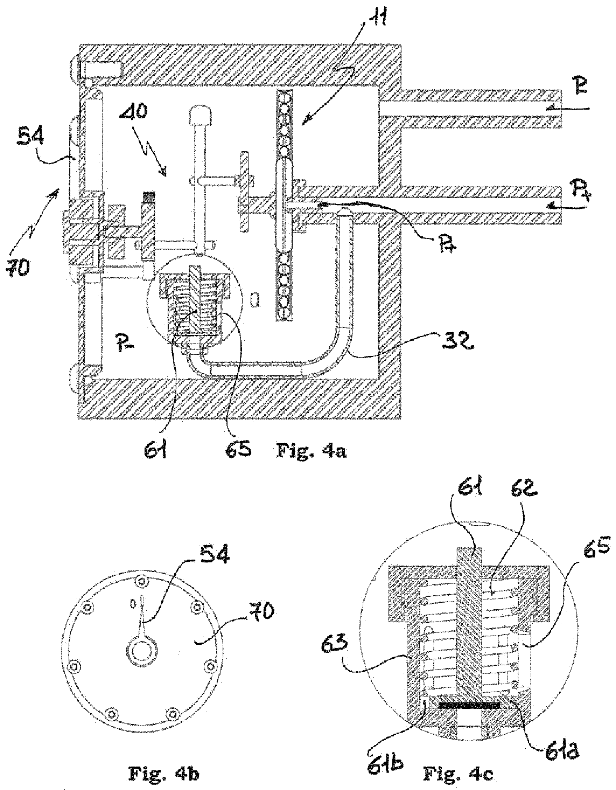

With reference to Figures 3c,4c, the safety valve 31 comprises preferably a piston 61 with a disk 61a arranged in a preferably cylindrical housing 63, one end 63a of which is in fluid communication with the connection 32 for the second fluid. The housing also comprises an opening 65 which places the housing in fluid communication with the internal chamber 12a of the casing, and the disk 61a of the piston is designed to act as a sealing closing member for opening/closing the connection between the end 63a of the valve connected to the line 11d for the second fluid under pressure and the opening 65, there being preferably provided a passage for the fluid in a peripheral zone 61b of the disk 61a. A spring 62 is inserted on the side of the disk 61a opposite to the end 63a of the valve, exerting a thrusting force against the disk 61a and bearing against a wall of the seat. The disk 61a is exposed to the fluid under pressure P+ which is supplied from the connection 32 and which pushes against a first surface of the disk 61a opposing the action of the spring 62, and to the pressure P- of the internal chamber 12a which, via the opening 65, enters into the valve housing and pushes against the opposite surface of the disk 61a. The following forces are therefore exerted on the piston 61:
-- the thrust generated by the spring 62;
-- the thrust F = ΔP x A= [(P+) - (P-)] x A generated by the differential pressure across the closing member of the piston, where "A" is the area of the disk surface.

The spring 62 which keeps the closing member in the position for closing the opening 65 may be configured with a rigidity K such as to ensure closing for as long as the differential pressure ΔP = (P+) - (P-) remains below the safety value, Psaf, thus ensuring that the capsule is protected. If the differential pressure which acts on the two surfaces (inner towards P+ and outer towards P-) of the disk 61a remains below Psaf, the valve remains closed (Fig. 4c), keeping the inlet port 11c for supplying the second fluid and the internal chamber 12a of the casing isolated from each other. If, for example during a transient filling operation, the opposite situation occurs, the safety valve opens (Fig. 3c), allowing release of the pressure and filling of the casing also with the second fluid under pressure P+. When the ΔP falls back below Psaf, the valve closes again and the pressure gauge starts to function correctly for the measurement of the differential pressure, without the capsule suffering any damage.

With reference in particular to Figs. 4a, 5a and 6, the pressure gauge according to the invention comprises a transmission system 40 able to amplify and convert the displacement of a membrane 11b of the capsule 11 into a rotation of the shaft 48 inside the chamber 12a of the casing 12, so as to allow the indication and/or the acquisition of a differential pressure value detected.

In the preferred embodiment shown, the transmission system 40 is formed by a kinematic chain comprising a pin 41 integral with the outer surface of a membrane 11b of the capsule 11, in particular the membrane 11b arranged on the opposite side to the inlet 11d for the second fluid into the said capsule.

A first rod 44 has a first end connected to the pin 41 by means of a hinge 45 so that the end of the first rod 44 is displaceably integral with the pin 41 and designed to rotate relative to the pin about the axis 45a of the hinge.

The rotation of the rod 44 causes rotation of a transmission element 44a which is integral with the other end of the first rod 44 which preferably has a substantially L-shaped form. The transmission element 44a meshes with a segment gear 46 so that the rotation of the transmission element 44a causes the rotation of the segment gear 46 about its axis 46a.

A toothed wheel 47, rotationally integral with the internal shaft 48, meshes with the segment gear 46. An amplified rotation of the toothed wheel 47, and therefore of the internal shaft 48, corresponds to the rotation of the segment gear 46.

The internal shaft may be connected to a measurement indicator element, such as a pointer 54, and/or to measurement acquisition means, such as a rotational sensor able to convert a rotation of the shaft into an electric signal. This type of assembly for transmission/conversion of the expanding movement of the capsule is only a preferred configuration of a transformation and/or amplification unit, numerous equivalent embodiments known in the sector of pressure gauges being possible.

In the preferred embodiment shown, the shaft 48 is inside the internal chamber 12a of the casing 12 and is therefore immersed in the first fluid at a pressure P-. If the pointer is immersed in the same internal chamber 12a which is "wetted", the first fluid, which usually contains a lot of dirt and impurities, may make reading of the measurement difficult.

In order to overcome this drawback, the pressure gauge according to the invention may comprise an assembly for transmission of the rotational movement of the internal shaft 48 to a shaft 58 outside the casing 12.

The transmission assembly is preferably of the magnetic transmission type and may for example comprise a magnet 51 integral with the shaft 48 "wetted" inside the casing 12 and having (N/S) polarization in a plane perpendicular to the axis of the shaft, and a magnet 52 which is integral with the external shaft 58 and has an opposite polarization (S/N) which is also perpendicular to the axis of the shaft. The rotation of the magnet 51 integral with the internal shaft 48 (due to the expansion of the capsule 11) magnetically drives the magnet 52 integral with the external shaft which is thus rotationally driven about the rotation axis 48a.

The indication pointer 54 may in this way may be fixed to the external shaft 58 and arranged in a position outside the chamber 12a inside the casing, and a dial face 70 for reading the measurement indicated by the pointer 54 may be kept dry and dirt-free.

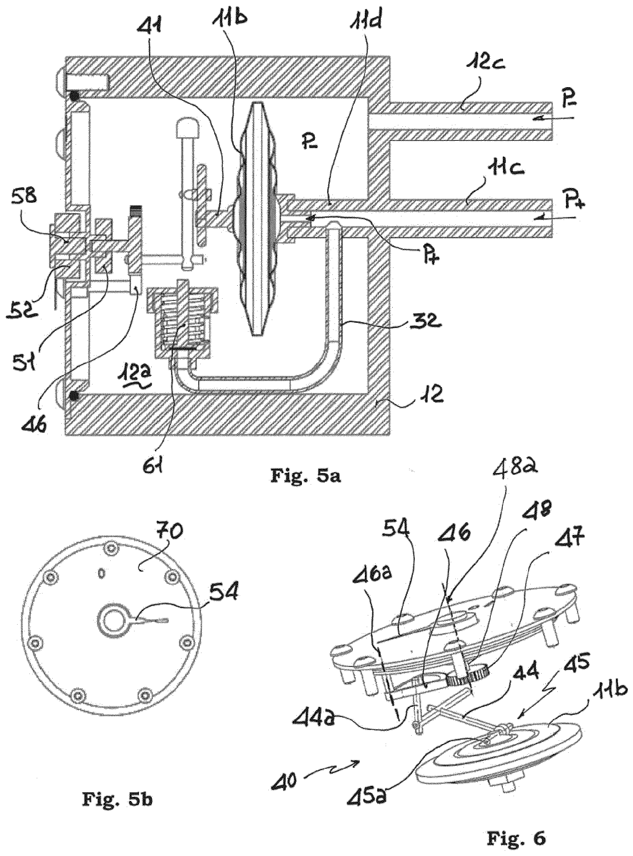

With reference to Figs. 3, 4 and 5 and assuming a first fluid at a pressure P-= 9.975 and a second fluid at a pressure P+ = 10 bar, with Psaf = 100mbar, an example of operation of the device for measuring the differential pressure according to the invention may be described as follows:
- ) the first fluid at a pressure P- is supplied to the chamber 12a by means of the supply inlet port 12c and the second fluid at a pressure P+ is supplied to the inlet port 11c for supplying the second fluid under pressure;
- ) the hydraulic circuit part comprising the capsule supply line 11d, the capsule itself and the line 32 for supplying the safety device are gradually filled until they are at a pressure P+;
- ) since the chamber 12a is initially empty and therefore, for example, at atmospheric pressure, it may require a longer time to be filled and to reach the pressure P- of the first fluid; the differential pressure (P between the fluid at a pressure P+ (inside the capsule supply line) and the pressure inside the internal chamber 12a may therefore be greater than the safety value Psaf, resulting in opening of the safety valve 60; in the preferred embodiment, the closing member 61 therefore moves inside the housing 63, opening the passage 63a which enters into fluid communication with the breather opening 65, thus placing the line 32 and the port 11c at a pressure P+ in fluid communication with the internal chamber 12a (Figs. 3a,3c) and allowing release of the excess pressure and part of the second fluid at the pressure P+;
- ) in this condition, for as long as the safety valve is open, the capsule contains generally a fluid at a pressure which tends to be kept in equilibrium with the pressure inside the chamber 12a (owing to the connection between capsule and chamber 12a). The capsule is therefore isolated from the risk of damage and generally remains in the non-expanded condition to which a measurement of the differential pressure equal to zero corresponds (Fig. 3b);
- ) the first fluid and the second fluid continue to be supplied to the respective supply ports 12c, 11c and then respectively to the internal chamber 12a by means of the line 12c and to the safety device 30,60. The internal chamber 12a is gradually filed with fluid under pressure;
- ) when the pressure differential ΔP between the internal chamber 12a and the port 11c for supplying the second fluid under pressure falls below the safety value Psaf, the force of the spring 62 prevails and the closing member 61,61a of the safety valve moves into the position for closing the opening 65 and the passage 63a, closing the connection between the port 11c for supplying the second fluid and the internal chamber 12a (Figs. 4a,4c);
- ) the pressure gauge is at this point in the configuration for measuring the differential pressure;
- ) as the second fluid at a pressure P+ continues to be supplied to the supply port 11c, the internal volume of the capsule 11 is gradually filled and expands;
- ) the expansion of the capsule (Fig. 5a) causes the displacement of the outer surface of the membrane 11b which is amplified and converted by the transmission unit 40 into a rotational movement of the shaft 48 and then into a measurement indication of the pointer 54 on the dial face 70 (Fig. 5b);
- ) in particular, the pin 41 integral with the surface 11b of the capsule 11 moves along the longitudinal axis X-X when the capsule is deformed, resulting in a translatory movement of the surface of the membrane with which the pin 41 is integral. The movement of the pin causes the rotation of the first rod 44 about the axis of the hinge 45. The rotation of the rod 44 causes rotation of the transmission element 44a integral therewith, this in turn pushing the segment gear 46, causing the rotation thereof about its axis. The toothed wheel 47 meshes with the segment gear 46 and is integral with the internal shaft 48. The rotation of the internal shaft 48 causes a rotation of the external shaft 58 and therefore of the pointer 53 which indicates the ΔP measurement on the dial face 70.
- ) In the numerical example assumed, a pressure difference ΔP = (P+) - (P-) = 25 mbar is shown on the dial face 70.

It is therefore clear how the pressure gauge for measuring a differential pressure between two fluids under pressure according to the invention is able to ensure an efficient measurement of the differential pressure also in the case of fluids, the nominal pressure of which is much greater than the pressure difference which is to be measured, owing in particular to the use of the detection capsule in combination with the safety device and the means for converting the movement of the membrane of the capsule into an indication and/or measurement of the pressure difference.

The pressure gauge is simple and economical to assemble and to mount on hydraulic circuits, preferably for performing heating/cooling, or preferably on fluid distribution headers.

In addition to the above, the preferred embodiments of the pressure gauge result in a greater technical advantage since they allow reading of the measurement even in the presence of fluids which contain a lot of impurities and dirt.

The pressure gauge according to the invention is not limited to the preferred embodiment in which the first fluid supplied to the internal chamber of the casing is at lower pressure and the second fluid supplied to the capsule is at a higher pressure. The pressure gauge may in fact also be configured with a pre-deformed, in particular pre-dilated, capsule able to compress when a fluid at a lower pressure is supplied inside the capsule and a fluid at a higher pressure is present inside the internal chamber of the casing. The capsule may also be configured so that it is able to both expand and compress, so as to be able to measure both a negative and a positive differential pressure between the first and second fluids.

Although described in the context of a number of embodiments and a number of preferred examples of embodiment of the invention, it is understood that the scope of protection of the present invention is determined solely by the claims which follow.

## Claims

1. Pressure gauge for measuring a differential pressure (ΔP) between a first fluid at a first pressure (P-) and a second fluid at a second pressure (P+), comprising:
- an external casing (2;12) which defines an internal chamber (2a;12a) sealingly closed off from an environment (A) outside the casing and designed to be filled with the first fluid at a pressure (P-);
- at least one inlet port (2c;12c) for supplying the said first fluid to the internal chamber;
- a capsule (1;11) inserted inside the internal chamber (2a;12a) and designed to be filled with the second fluid at a pressure (P+), the capsule (1;11) being configured to be deformed, depending on the pressure difference between the pressure (P+) of the second fluid inside the capsule and the pressure (P-) of the first fluid inside the chamber;
- an inlet port (1c,11c) for supplying the said second fluid to the capsule (1;11);
- a unit (4;40) designed to convert the displacement of a part (11b) of the capsule (1;11) caused by the said deformation into an indication and/or a measurement of the value of the differential pressure between the first fluid and the second fluid; **characterized in that** it comprises:
- a safety device (3;30;60) arranged inside the internal chamber (2a;12a) and in fluid communication between the inlet port (1c, 11c, 11d) for supplying the second fluid (P+) to the capsule (1;11) and the capsule itself; the safety device being configured to fluidly connect the inlet port (1c,11c,11d) for supplying the second fluid at a pressure (P+) with the internal chamber (2a;12a) for as long as the differential pressure (ΔP) between the inside of the chamber (2a;12a) and the second fluid inlet port is greater than or equal to a predefined safety value (Psaf) and to close the connection between said inlet port for supplying the second fluid and said internal chamber when said pressure difference value is less than said safety value.

2. Pressure gauge according to claim 1, wherein the capsule (1) is formed by at least two metal membranes which are sealingly closed and define an internal volume.

3. Pressure gauge according to the preceding claim, wherein the unit (4;40) for converting the displacement of a part of the capsule into an indication and/or measurement of the differential pressure comprises a transmission system (40) configured to convert and optionally amplify the translatory displacement of a part of a membrane (11b) of the capsule (11) into a rotation of a shaft (48) inside the chamber (12a) of the casing (12).

4. Pressure gauge according to the preceding claim, wherein the transmission system (40) comprises a kinematic chain comprising a pin (41) integral with the outer surface of a membrane (11b) of the capsule (11) and kinematically connected to a segment gear (46), so that the displacement of the pin causes a proportional rotation of the segment gear (46) about its own axis (46a);
a toothed wheel (47), which is rotationally integral with the internal shaft (48), meshing with the segment gear (46).

5. Pressure gauge according to either one of the preceding claims 3 or 4, wherein the internal shaft (48) is connected to a measurement indicator element, such as a pointer (54) arranged on a dial face (70), and/or to measurement acquisition means such as a rotational sensor able to convert the rotation of the internal shaft into an electric signal.

6. Pressure gauge according to any one of the preceding claims 3-5, comprising an assembly for transmission of the rotational movement of the internal shaft (48) to a shaft (58) outside the casing (12), the transmission assembly being preferably of the magnetic transmission type.

7. Pressure gauge according to any one of the preceding claims, wherein the safety device (30) comprises a safety valve (31) arranged along the capsule supply line (11d) between the inlet port (11c) for supplying the second fluid and the capsule (11) itself, preferably by means of a connection (32) fluid-dynamically connected to a capsule supply line (11d).

8. Pressure gauge according to the preceding claim, wherein the safety valve (31) comprises a closing member (61; 61a) arranged inside a housing (63), one end (63a) of which is in fluid communication with the inlet port for supplying the second fluid, wherein the housing further comprises an opening (65) which places said housing in communication with the internal chamber (12a) of the casing, and the closing member is designed to cause opening/closing of the connection between the end (63a) of the valve connected to the supply line (11d) for the second fluid under pressure and the opening (65), a passage for the fluid being preferably provided in a peripheral zone (61b) of the closing member.

9. Pressure gauge according to the preceding claim, wherein the closing member (61;61a) is movable into an open position against the thrust of spring means pushing against the closing member so as to cause closing of the connection between the inlet port supplying the second fluid and the internal chamber (12a) of the casing.

10. Pressure gauge according to any one of the preceding claims, wherein the capsule is configured to receive inside it a second fluid at a pressure greater than the first pressure of the first fluid, and wherein said deformation of the capsule is an expansion proportional to the pressure difference between said second fluid at a higher pressure and said first fluid at a lower pressure.

11. Method for measuring a differential pressure between two fluids under pressure using a pressure gauge according to one of the preceding claims, comprising the following steps:
- supplying a first fluid at a first pressure to the inlet port for supplying the first fluid and via this inlet port to the internal chamber (12a) of the casing (12) of the pressure gauge;
- supplying a second fluid at a second pressure to the inlet port for supplying the second fluid, so as to at least partially fill the capsule with the second fluid;
- connecting, by means of the safety device, the inlet port (1c,11c,11d) for supplying the second fluid under pressure (P+) to the internal chamber (2a;12a) for as long as the differential pressure (ΔP) between the inside of the chamber (2a;12a) and the second fluid supply line is greater than or equal to a predefined safety value (Psaf);
- closing, by means of the safety device, the connection between said inlet port for supplying the second fluid and said internal chamber, when said differential pressure value is less than said safety value, thereby causing supplying of the second fluid to the capsule (1;11) only and deformation of said capsule due to the pressure difference between the first fluid and second fluid;
- detecting the displacement of a part of the capsule caused by the deformation thereof and converting it into an indication and/or a measurement of the value of the differential pressure between the first fluid and the second fluid.

12. Method for measuring a pressure difference according to the preceding claim, wherein the first and second fluids under pressure are drawn off from different points of a hydraulic circuit inside which a single liquid under pressure circulates, in particular a hydraulic circuit for heating rooms.

## Patentansprüche

1. Druckmesser zum Messen eines Differenzdrucks (ΔP) zwischen einem ersten Fluid mit einem ersten Druck (P-) und einem zweiten Fluid mit einem zweiten Druck (P+), umfassend:
- ein Außengehäuse (2; 12), das eine innere Kammer (2a; 12a) definiert, die gegenüber einer Umgebung (A) außerhalb des Gehäuses dicht verschlossen und dafür ausgelegt ist, mit dem ersten Fluid mit einem Druck (P-) gefüllt zu werden;
- zumindest eine Einlassöffnung (2c; 12c) zum Zuführen des ersten Fluids an die innere Kammer;
- eine Kapsel (1; 11), die in die innere Kammer (2a; 12a) eingesetzt und dafür ausgelegt ist, mit dem zweiten Fluid mit einem Druck (P+) gefüllt zu werden, wobei die Kapsel (1; 11) gestaltet ist, um in Abhängigkeit von der Druckdifferenz zwischen dem Druck (P+) des zweiten Fluids in der Kapsel und dem Druck (P-) des ersten Fluids in der Kammer verformt zu werden;
- eine Einlassöffnung (1c, 11c) zum Zuführen des zweiten Fluids zu der Kapsel (1; 11);
- eine Einheit (4: 40), die dafür ausgelegt ist, die durch die Verformung verursachte Verlagerung eines Teils (11b) der Kapsel (1; 11) in eine Anzeige und/oder eine Messung des Werts des Differenzdrucks zwischen dem ersten Fluid und dem zweiten Fluid umzuwandeln;
**dadurch gekennzeichnet, dass** er umfasst:
- eine Sicherheitsvorrichtung (3; 30; 60), die in der inneren Kammer (2a; 12a) und in Fluidverbindung zwischen der Einlassöffnung (1c, 11c, 11d) zum Zuführen des zweiten Fluids (P+) zu der Kapsel (1; 11) und der Kapsel selbst angeordnet ist; wobei die Sicherheitsvorrichtung gestaltet ist, um die Einlassöffnung (1c, 11c, 11d) zum Zuführen des zweiten Fluids mit einem Druck (P+) mit der inneren Kammer (2a; 12a) in Strömungsverbindung zu bringen, solange der Differenzdruck (ΔP) zwischen dem Inneren der Kammer (2a; 12a) und der Einlassöffnung für das zweite Fluid größer oder gleich einem vordefinierten Sicherheitswert (Psaf) ist, und die Verbindung zwischen der Einlassöffnung zum Zuführen des zweiten Fluids und der inneren Kammer zu schließen, wenn der genannte Druckdifferenzwert kleiner als der genannte Sicherheitswert ist.

2. Druckmesser nach Anspruch 1, wobei die Kapsel (1) von zumindest zwei Metallmembranen gebildet wird, die abdichtend geschlossen sind und ein Innenvolumen definieren.

3. Druckmesser nach einem der vorhergehenden Ansprüche, wobei die Einheit (4; 40) zum Umwandeln der Verlagerung eines Teils der Kapsel in eine Anzeige und/oder Messung des Differenzdrucks ein Übertragungssystem (40) umfasst, das zum Umwandeln und wahlweise zum Verstärken der Verschiebungsverlagerung eines Teils einer Membran (11b) der Kapsel (11) in eine Drehung einer Welle (48) in der Kammer (12a) des Gehäuses (12) gestaltet ist.

4. Druckmesser nach einem der vorhergehenden Ansprüche, wobei das Übertragungssystem (40) eine kinematische Kette umfasst, die einen Stift (41) umfasst, der mit der Außenfläche einer Membran (11b) der Kapsel (11) einstückig ist und kinematisch mit einem Zahnsegment (46) verbunden ist, so dass die Verlagerung des Stiftes eine proportionale Drehung des Zahnsegments (46) um seine eigene Achse (46a) verursacht;
ein gezahntes Rad (47), das, mit dem Zahnsegment (46) kämmend, mit der inneren Welle (48) drehfest verbunden ist.

5. Druckmesser nach einem der vorhergehenden Ansprüche 3 oder 4, wobei die innere Welle (48) mit einem Messwertanzeigeelement, wie etwa einem Zeiger (54), der auf einem Messzifferblatt (70) angeordnet ist, und/oder mit einem Messwerterfassungsmittel, wie etwa einem Drehungssensor, der die Drehung der inneren Welle in ein elektrisches Signal umwandeln kann, verbunden ist.

6. Druckmesser nach einem der vorhergehenden Ansprüche 3 bis 5, der eine Anordnung zur Übertragung der Drehbewegung der inneren Welle (48) auf eine Welle (58) außerhalb des Gehäuses (12) umfasst, wobei die Übertragungsanordnung vorzugsweise vom magnetischen Übertragungstyp ist.

7. Druckmesser nach einem der vorhergehenden Ansprüche, wobei die Sicherheitsvorrichtung (30) ein Sicherheitsventil (31) umfasst, das an der Zuführungsleitung zur Kapsel (11d) zwischen der Einlassöffnung (11c) zum Zuführen des zweiten Fluids und der Kapsel (11) selbst angeordnet ist, vorzugsweise durch eine Verbindung (32), die fluiddynamisch mit einer Zuführungsleitung zur Kapsel (11d) verbunden ist.

8. Druckmesser nach einem der vorhergehenden Ansprüche, wobei das Sicherheitsventil (31) ein Schließelement (61; 61a) umfasst, das in einem Gehäuse (63) angeordnet ist, das an einem Ende (63a) in Fluidverbindung mit der Einlassöffnung zum Zuführen des zweiten Fluids steht, wobei das Gehäuse ferner einen Durchlass (65) umfasst, der das Gehäuse mit der inneren Kammer (12a) des Gehäuses in Verbindung setzt, und das Schließelement dafür ausgelegt ist, Öffnen/Schließen der Verbindung zwischen dem Ende (63a) des Ventils, das mit der Zuführleitung (11d) für das zweite Fluid unter Druck verbunden ist, und dem Durchlass (65) zu verursachen, wobei ein Durchgang für das Fluid vorzugsweise in einer Umfangszone (61b) des Schließelements bereitgestellt ist.

9. Druckmesser nach einem der vorhergehenden Ansprüche, wobei das Schließelement (61; 61a) gegen die Druckkraft eines gegen das Schließelement drückenden Federmittels in eine offene Stellung bewegbar ist, um das Schließen der Verbindung zwischen der das zweite Fluid zuführenden Einlassöffnung und der inneren Kammer (12a) des Gehäuses zu verursachen.

10. Druckmesser nach einem der vorhergehenden Ansprüche, wobei die Kapsel zum Aufnehmen eines zweiten Fluids mit einem Druck, der größer als der erste Druck des ersten Fluids ist, in ihr gestaltet ist und wobei die Verformung der Kapsel eine zur Druckdifferenz zwischen dem zweiten Fluid mit einem höheren Druck und dem ersten Fluid mit einem niedrigeren Druck proportionale Ausdehnung ist.

11. Verfahren zum Messen eines Differenzdrucks zwischen zwei Fluiden unter Druck unter Verwendung eines Druckmessers nach einem der vorhergehenden Ansprüche, umfassend die folgenden Schritte:
- Zuführen eines ersten Fluids mit einem ersten Druck zu der Einlassöffnung zum Zuführen des ersten Fluids und über diese Einlassöffnung zu der inneren Kammer (12a) des Gehäuses (12) des Druckmessers;
- Zuführen eines zweiten Fluids mit einem zweiten Druck zu der Einlassöffnung zum Zuführen des zweiten Fluids, um die Kapsel zumindest teilweise mit dem zweiten Fluid zu füllen;
- Verbinden, durch die Sicherheitsvorrichtung, der Einlassöffnung (1c, 11c, 11d) zum Zuführen des zweiten Fluids unter Druck (P+) mit der inneren Kammer (2a; 12a), solange der Differenzdruck (ΔP) zwischen dem Inneren der Kammer (2a; 12a) und der Zuführleitung des zweiten Fluids größer oder gleich einem vordefinierten Sicherheitswert (Psaf) ist;
- Schließen, durch die Sicherheitsvorrichtung, der Verbindung zwischen dem Einlassanschluss zum Zuführen des zweiten Fluids und der inneren Kammer, wenn der Differenzdruckwert kleiner als der Sicherheitswert ist, wodurch das Zuführen des zweiten Fluids nur zu der Kapsel (1; 11) und die Verformung der Kapsel aufgrund der Druckdifferenz zwischen dem ersten Fluid und dem zweiten Fluid verursacht wird;
- Erfassen der Verlagerung eines Teils der Kapsel, die durch ihre Verformung verursacht wird, und ihr Umwandeln in eine Anzeige und/oder eine Messung des Wertes des Differenzdrucks zwischen dem ersten Fluid und dem zweiten Fluid.

12. Verfahren zum Messen einer Druckdifferenz gemäß dem vorhergehenden Anspruch, wobei das erste und das zweite Fluid unter Druck an verschiedenen Punkten eines Hydraulikkreises, in dem eine einzelne Flüssigkeit unter Druck zirkuliert, insbesondere eines Hydraulikkreises zur Raumheizung, abgezogen werden.

## Revendications

1. Jauge de pression destinée à mesurer une pression différentielle (ΔP) entre un premier fluide à une première pression (P-) et un second fluide à une seconde pression (P+), comprenant :
- un carter externe (2 ; 12) qui délimite une chambre interne (2a ; 12a) fermée hermétiquement par rapport à un environnement (A) extérieur au carter et conçue pour être rempli avec le premier fluide à une pression (P-) ;
- au moins un orifice d'entrée (2c ; 12c) d'alimentation de la chambre interne en ledit premier fluide ;
- une capsule (1 ; 11) introduite à l'intérieur de la chambre interne (2a ; 12a) et conçue pour être remplie avec le second fluide à une pression (P+), la capsule (1 ; 11) étant conçue pour se déformer, en fonction de la différence de pression entre la pression (P+) du second fluide à l'intérieur de la capsule et la pression (P-) du premier fluide à l'intérieur de la chambre ;
- un orifice d'entrée (1c, 11c) d'alimentation de la capsule (1 ; 11) en ledit second fluide ;
- une unité (4 ; 40) conçue pour convertir le déplacement d'une partie (11b) de la capsule (1 ; 11), provoqué par ladite déformation, en une indication et/ou une mesure de la valeur de la pression différentielle entre le premier fluide et le second fluide ; **caractérisée en ce qu'**elle comprend :
- un dispositif de sûreté (3 ; 30 ; 60) disposé à l'intérieur de la chambre interne (2a; 12a) et en communication fluidique entre l'orifice d'entrée (1c, 11c, 11d) d'alimentation de la capsule (1 ; 11) en le second fluide (P+) et la capsule elle-même ; le dispositif de sûreté étant conçu pour raccorder en communication fluidique l'orifice d'entrée (1c, 11c, 11d) d'alimentation du second fluide à une pression (P+) à la chambre interne (2a ; 12a) pendant aussi longtemps que la pression différentielle (ΔP) entre l'intérieur de la chambre interne (2a ; 12a) et l'orifice d'entrée de second fluide est supérieure ou égale à une valeur de sûreté prédéfinie (Psaf) et pour fermer le raccord entre ledit orifice d'entrée d'alimentation du second fluide et ladite chambre interne lorsque ladite valeur de différence de pression est inférieure à ladite valeur de sûreté.

2. Jauge de pression selon la revendication 1, dans laquelle la capsule (1) est formée par au moins deux membranes métalliques qui sont fermées hermétiquement et qui délimitent un volume interne.

3. Jauge de pression selon la revendication précédente, dans laquelle l'unité (4 ; 40) destinée à convertir le déplacement d'une partie de la capsule en une indication et/ou en une mesure de la pression différentielle comprend un système de transmission (40) conçu pour convertir et pour amplifier éventuellement le déplacement de translation d'une partie d'une membrane (11b) de la capsule (11) en une rotation d'un arbre (48) à l'intérieur de la chambre (12a) du carter (12).

4. Jauge de pression selon la revendication précédente, dans laquelle le système de transmission (40) comprend une chaîne cinématique comprenant une broche (41) d'un seul tenant avec la surface extérieure d'une membrane (11b) de la capsule (11) et en prise cinématique avec un secteur denté (46), de sorte que le déplacement de la broche provoque une rotation proportionnelle du secteur denté (46) autour de son propre axe (46a) ;
une roue dentée (47), qui est solidaire en rotation avec l'arbre interne (48), engrenant avec le secteur denté (46).

5. Jauge de pression selon l'une ou l'autre des revendications précédentes 3 ou 4, dans laquelle l'arbre interne (48) est relié à un élément indicateur de mesure, tel qu'une aiguille (54) disposée sur une face de cadran (70), et/ou à un moyen d'acquisition de mesure tel qu'un capteur de rotation pouvant convertir la rotation de l'arbre interne en un signal électrique.

6. Jauge de pression selon l'une quelconque des revendications 3 à 5 précédentes, comprenant un ensemble de transmission du mouvement de rotation de l'arbre interne (48) à un arbre (58) externe au carter (12), l'ensemble de transmission étant de préférence du type transmission magnétique.

7. Jauge de pression selon l'une quelconque des revendications précédentes, dans laquelle le dispositif de sûreté (30) comprend une soupape de sûreté (31) disposée le long de la conduite d'alimentation de capsule (11d) entre l'orifice d'entrée (11c) d'alimentation du second fluide et la capsule (11) elle-même, de préférence au moyen d'un raccord (32) raccordé en communication fluidiquedynamique à une conduite d'alimentation de capsule (11d).

8. Jauge de pression selon la revendication précédente, dans laquelle la soupape de sûreté (31) comprend un élément de fermeture (61 ; 61a) disposé à l'intérieur d'un boîtier (63), dont une extrémité (63a) est en communication fluidique avec l'orifice d'entrée d'alimentation du second fluide, dans laquelle le boîtier comprend en outre une ouverture (65) qui met ledit boîtier en communication avec la chambre interne (12a) du carter, et l'élément de fermeture est conçu pour provoquer une ouverture/fermeture du raccord entre l'extrémité (63a) de la soupape raccordée à la conduite d'alimentation (11d) destinée au second fluide sous pression et l'ouverture (65), un passage destiné au fluide étant de préférence ménagé dans une zone périphérique (61b) de l'élément de fermeture.

9. Jauge de pression selon la revendication précédente, dans laquelle l'élément de fermeture (61 ; 61a) peut être déplacé dans une position ouverte contre la poussée d'un moyen formant ressort poussant contre l'élément de fermeture de façon à provoquer une fermeture du raccord entre l'orifice d'entrée alimentant le second fluide et la chambre interne (12a) du carter.

10. Jauge de pression selon l'une quelconque des revendications précédentes, dans laquelle la capsule est conçue pour recevoir en son sein un second fluide à une pression supérieure à la première pression du premier fluide, et dans laquelle ladite déformation de la capsule est une dilatation proportionnelle à la différence de pression entre ledit second fluide à une pression plus élevée et ledit premier fluide à une pression plus basse.

11. Procédé pour mesurer une pression différentielle entre deux fluides sous pression au moyen d'une jauge de pression selon l'une des revendications précédentes, comprenant les étapes suivantes consistant à :
- alimenter en un premier fluide à une première pression l'orifice d'entrée d'alimentation du premier fluide et, par le biais de cet orifice d'entrée, la chambre interne (12a) du carter (12) de la jauge de pression ;
- alimenter en un second fluide à une seconde pression l'orifice d'entrée d'alimentation du second fluide, de façon à au moins partiellement remplir la capsule avec le second fluide ;
- raccorder, au moyen d'un dispositif de sûreté, l'orifice d'entrée (1c, 11c, 11d) d'alimentation du second fluide sous pression (P+) à la chambre interne (2a ; 12a) pendant aussi longtemps que la pression différentielle (ΔP) entre l'intérieur de la chambre (2a ; 12a) et la conduite d'alimentation de second fluide est supérieure ou égale à une valeur de sûreté prédéfinie (Psaf) ;
- fermer, au moyen du dispositif de sûreté, le raccord entre ledit orifice d'entrée d'alimentation du second fluide et ladite chambre interne, lorsque ladite valeur de pression différentielle est inférieure à ladite valeur de sûreté, provoquant ainsi une alimentation de la capsule (1 ; 11) seulement en le second fluide et une déformation de ladite capsule en raison de la différence de pression entre le premier fluide et le second fluide ;
- détecter le déplacement d'une partie de la capsule provoqué par sa déformation et le convertir en une indication et/ou en une mesure de la valeur de la pression différentielle entre le premier fluide et le second fluide.

12. Procédé pour mesurer une différence de pression selon la revendication précédente, dans lequel les premier et second fluides sous pression sont soutirés à partir de différents points d'un circuit hydraulique à l'intérieur duquel circule un unique liquide sous pression, en particulier un circuit hydraulique de chauffage de pièces.
